# FASCICULE DE BREVET EUROPEEN

(11) **EP 2 607 405 B1**
(45) Date de publication et mention de la délivrance du brevet: **27.02.2019**
(21) Numéro de dépôt: 12290398.2
(22) Date de dépôt: 16.11.2012
(51) Int. Cl.: C08J 3/16, C09K 8/516, C09K 8/575, C08J 3/09

(54) **Procédé de synthèse d'un système nanoparticulaire de polyélectrolytes de charges opposées et utilisation pour le traitement de formations géologiques**
Syntheseverfahren eines Nanopartikelsystems aus Polyelektrolyten entgegengesetzter Ladungen, und Verwendung für die Behandlung von geologischen Formationen
Method for synthesising a nanoparticulate system of polyelectrolytes with opposite charges and use for the treatment of geological formations

(30) Priorité: 21.12.2011 FR 1104002
(43) Date de publication de la demande: 26.06.2013
(73) Titulaire: IFP Energies nouvelles, 92500 Rueil-Malmaison (FR)
(72) Inventeur: Rondon-Villatte, Céline, 92500 Rueil-Malmaison (FR); Argillier, Jean-François, 92500 Rueil-Malmaison (FR); Leal Carderon, Fernando, 33650 La Brède (FR)
(74) Mandataire: IFP Energies nouvelles

(56) Documents cités:
- EP-A1- 2 218 761
- FR-A1- 2 881 787
- US-A1- 2010 314 108

## Description

### Domaine technique de l'invention

La présente invention concerne un procédé de synthèse de nanoparticules en milieu organique, à partir de complexes de polyélectrolytes de charges opposées.
L'invention concerne également une méthode de traitement de formations géologiques utilisant des nanoparticules obtenues en milieu organique à partir de complexes de polyélectrolytes de charges opposées.

### Art antérieur

La demande de brevet FR-2 881 787 décrit une méthode de traitement des réservoirs pétroliers par injection de particules de taille nanométrique comprenant un polymère hydrosoluble actif anti-dépôts minéraux encapsulé dans une matrice pour former un nanocomplexe. La formation de ces nanocomplexes se fait par précipitation contrôlée de polyélectrolytes cationiques et anioniques. Après formation et éventuelle réticulation en phase aqueuse, les nanocomplexes sont dispersés en phase aqueuse. Il est délicat de les récupérer et les disperser en phase organique ensuite. La granulométrie des nanocomplexes ainsi obtenus varie aussi en fonction du choix des polymères de départ et est assez délicatement contrôlable. La demande de brevet EP 2 218 761 divulgue une méthode de formation de systèmes particulaires micro ou nanométriques et l'utilisation de tels systèmes pour traiter des formations ou cavités souterraines poreuses et perméables, le système particulaire étant préparé à partir du mélange d'au moins deux émulsions de type eau dans l'huile. La demanderesse a mis en évidence, que d'une façon surprenante, il était possible d'obtenir des nanoparticules dont la granulométrie est plus facilement contrôlable que ce qui est décrit dans l'art antérieur et directement dispersées en phase organique.

### Description de l'invention

### Résumé de l'invention

L'invention concerne un procédé de synthèse d'un système nanoparticulaire de complexes de polyélectrolytes de charges opposées en phase organique par mélange :
- d'une première émulsion calibrée de type eau dans huile comprenant une phase continue organique, un tensio-actif liposoluble et une phase aqueuse dispersée contenant un mélange de deux polyélectrolytes de charges opposées : un polymère anionique et un polymère cationique, à un pH élevé ou faible, le pH étant choisi de telle sorte qu'au moins un des deux polyélectrolytes ne soit pas ou soit très faiblement chargé, l'un au moins des polyélectrolytes ayant un taux d'ionisation dépendant du pH, c'est-à-dire inférieur au pKA pour un polymère anionique, supérieur au pKB pour un polymère cationique ;
- d'une deuxième émulsion de type eau dans huile comprenant une phase aqueuse acide ou basique, dispersée dans une phase continue organique et un tensio-actif liposoluble, ladite phase aqueuse étant acide lorsque ledit polyélectrolyte ayant un taux d'ionisation dépendant du pH est le polymère cationique et basique lorsque ledit polyélectrolyte ayant un taux d'ionisation dépendant du pH est le polymère anionique.

De préférence, le procédé comprend les étapes suivantes :
a) Préparation de ladite première émulsion calibrée de solution de polyélectrolytes de charges opposées dans une phase continue organique par :
   - Préparation d'un premix brut par mélange de solution aqueuse d'un premier polyélectrolyte et de solution aqueuse d'un deuxième polyélectrolyte pour obtenir une phase aqueuse et introduction progressive de la phase aqueuse obtenue dans le tensio-actif liposoluble.
   - Cisaillement sous agitation mécanique du prémix brut afin d'obtenir un prémix monodisperse et calibré.
   - Dilution progressive du prémix calibré par addition de la phase continue organique et homogénéisation.
b) Préparation de ladite deuxième émulsion sous forme d'une émulsion grossière comprenant une phase aqueuse acide ou basique dans une phase organique par préparation d'une phase aqueuse comprenant un composé acide ou basique, puis dissolution du tensio-actif liposoluble dans la phase organique avec agitation rapide, et introduction progressive de la phase aqueuse et homogénéisation du système.
c) Mélange de ladite première émulsion calibrée et de ladite deuxième émulsion grossière par agitation mécanique, repos et récupération des complexes nanoparticulaires formés par centrifugation et lavage.

Ledit polymère anionique est préférentiellement choisi parmi les polymères ou copolymères dérivant de monomères anioniques contenant des groupements carboxylate, sulfonate, phosphate ou phosphonate, les copolymères synthétiques dérivant de monomères anioniques tels que décrits précédemment et de monomères neutres et les polymères naturels.

Ledit polymère cationique est préférentiellement choisi parmi les polymères ou copolymères synthétiques dérivant de monomères cationiques classiques, c'est-à-dire de formule générale suivante: 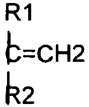 où R1 ou R2 comportent au moins un atome N,
les polyethylènes imines, les polyamides aminés, les polyamines, les copolymères synthétiques dérivant de monomères cationiques et de monomères neutres et les polymères naturels tels que les amidons modifiés positivement, les chitosanes, la gélatine, les galactomannanes modifiés positivement, ou les dérivés cellulosiques modifiés positivement.

Ledit tensioactif liposoluble est de manière préférée un tensioactif non ionique choisi parmi les alcools gras oxyéthylés, les alkylphénols oxyéthylés, les produits oxyéthylés-oxypropylés, les éthers de glucose, les esters de glycérol, les esters de polyéthylèneglycols, les esters de sorbitanne, les esters de sucre, les diéthanolamides, les amines grasses éthoxylées, alkanolamides éthoxylées, les amines éthoxylées, ou les copolymères bloc d'oxyde d'éthylène ou de propylène .

Ladite phase continue organique est de préférence constituée soit par une huile minérale commerciale soit par une huile de synthèse, ou par une huile végétale ou tout mélange de ces huiles.

De préférence, la concentration en tensioactif est supérieure à la concentration micellaire critique avant le mélange de ladite première émulsion calibrée et de ladite deuxième émulsion.

De préférence, la concentration en polymères anionique ou cationique dans la phase aqueuse est comprise entre 0,01 et 50% en masse.

De préférence, le rapport des phases eau/huile est compris entre 10 et 50 % en volume de phase aqueuse.

L'invention concerne également une méthode de traitement d'une formation géologique poreuse et perméable dans laquelle on effectue les étapes suivantes :
- on prépare une composition comprenant un système particulaire de taille nanométrique de complexes polycation/polyanion obtenus par mélange :
   - d'une première émulsion calibrée de type eau dans huile comprenant une phase continue organique, un tensio-actif liposoluble et une phase aqueuse dispersée contenant un mélange de deux polyélectrolytes de charges opposées : un polymère anionique et un polymère cationique, à un pH élevé ou faible, ledit pH étant choisi_de telle sorte qu'au moins un des deux polyélectrolytes ne soit pas ou soit très faiblement chargé, l'un au moins des polyélectrolytes ayant un taux d'ionisation dépendant du pH : inférieur au pKA pour un polymère anionique, supérieur au pKB pour un polymère cationique ;
   - d'une deuxième émulsion de type eau dans huile comprenant une phase aqueuse acide ou basique, dispersée dans une phase continue organique et un tensio-actif liposoluble, ladite phase aqueuse étant acide lorsque ledit polyélectrolyte ayant un taux d'ionisation dépendant du pH est le polymère cationique et basique lorsque ledit polyélectrolyte ayant un taux d'ionisation dépendant du pH est le polymère anionique.
- on injecte ladite composition dans la formation poreuse et perméable dans laquelle s'écoule(nt) de l'eau et/ou de l'huile et/ou du gaz.

Dans un mode de réalisation, on injecte ladite composition dans une formation comportant une zone à forte perméabilité à l'eau pour réduire sélectivement la perméabilité à l'eau dans les réservoirs d'huile, de gaz ou dans les stockages de gaz.

Ladite composition peut comprendre un système particulaire dans lequel le polymère anionique est choisi parmi les polymères actifs anti-dépôts minéraux.

### Description détaillée de l'invention

### Procédé de synthèse du système particulaire de taille nanométriaue

L'invention concerne un procédé de synthèse d'un système particulaire de nanocomplexes de polyélectrolytes de charges opposées en phase organique par mélange
- d'une première émulsion calibrée de type eau dans huile comprenant une phase continue organique, un tensio-actif liposoluble et une phase aqueuse dispersée contenant un mélange de deux polyélectrolytes de charges opposées : un polymère anionique et un polymère cationique, l'un au moins de ces polyélectrolytes ayant un taux d'ionisation dépendant du pH, l'émulsion étant réalisée à un pH élevé ou faible, afin que le ou les polyélectrolytes ayant un taux d'ionisation dépendant du pH ne soi(en)t pas ou soi(en)t très faiblement chargé(s) : inférieur au pKA pour un polymère anionique, supérieur au pKB pour un polymère cationique,
- d'une deuxième émulsion de type eau dans huile comprenant une phase aqueuse acide ou basique, dispersée dans une phase continue organique et un tensio-actif liposoluble, ladite phase aqueuse étant acide lorsque ledit polyélectrolyte ayant un taux d'ionisation dépendant du pH est le polymère cationique et basique lorsque ledit polyélectrolyte ayant un taux d'ionisation dépendant du pH est le polymère anionique.

On entend par polyélectrolyte faible un polyélectrolyte ayant un taux d'ionisation qui est dépendant du pH.
On entend par pH faible un pH inférieur à 7, et de préférence inférieur à 4.
On entend par pH élevé un pH supérieur à 7, et de préférence supérieur à 10.
La granulométrie des particules d'hydrogel formées par complexation des polyélectrolytes de charges opposées est contrôlée au moins en partie par la taille de l'émulsion réalisée, qui est de préférence fine, c'est-à-dire avantageusement avec une taille de particules inférieure à 10 µm afin de garantir une taille suffisamment faible des particules de polyélectrolytes de charges opposées.

### Phase continue huile

Les nanoparticules du système particulaire formées à partir de l'émulsion de polyélectrolytes se trouvent naturellement dispersées dans une phase continue huile.

Les émulsions utilisées pour préparer le système particulaire de taille nanométrique de complexes polyélectrolytes de charges opposées sont des émulsions de type eau dans huile.

La phase huile de l'émulsion est constituée de tous les types d'huiles ou de solvants organiques, à partir du moment où le système de tensioactif choisi permet d'obtenir des émulsions suffisamment stables pour former les nanoparticules.

Tout type d'huile connu peut être utilisé : l'huile est choisie en fonction de l'application recherchée et/ou d'un cahier des charges donné.

La phase organique est constituée, par exemple, soit par une huile minérale commerciale soit par une huile de synthèse, ou par une huile végétale ou tout mélange de ces huiles.

Pour certaines applications pour lesquelles les réglementations environnementales sont strictes, comme par exemple les traitements de puits ou de formations pétrolières en Mer du Nord, on pourra avantageusement utiliser une phase huile biodégradable ou peu écotoxique comme par exemple les huiles végétales, leurs esters ou autres dérivés.

### Choix des polyélectrolytes

Les polyélectrolytes sont choisis de telle sorte :
- qu'ils soient de charge opposée dans une certaine gamme de pH: un polyanion (ou polymère anionique) et un polycation (ou polymère cationique)
- qu'au moins un des deux polyélectrolytes soit un polyélectrolyte faible, c'est à dire ayant un taux d'ionisation dépendant du pH, afin qu'il n'y ait pas d'interaction entre les deux polymères au pH initial de l'émulsion primaire (première émulsion) avant mélange avec l'émulsion de base ou d'acide (deuxième émulsion) et qu'il y ait au contraire interaction après mélange avec l'émulsion de base ou d'acide, car alors les deux polyélectrolytes sont de charges opposées .

L'un des polyélectrolytes est un polymère anionique choisi parmi les polymères anioniques classiques connus de l'Homme du métier.

On citera par exemple les polymères ou copolymères dérivant de monomères anioniques contenant des groupements carboxylate, sulfonate, phosphate ou phosphonate, les copolymères synthétiques dérivant de monomères anioniques tels que décrits précédemment et de monomères neutres et les polymères naturels.

Les monomères anioniques peuvent être choisis parmi les monomères acrylates, méthacrylate, itaconate, 2-acrylamido-2-méthyl-propane sulfonate, 2-méthacryloyloxy éthane sulfonate, 3-acrylamido-3-méthyl butanoate, styrène sulfonate, styrène carboxylate, vinyl sulfonate et les sels de l'acide maléique.

Les monomères neutres peuvent être par exemple choisis parmi l'acrylamide, l'acide acrylique, la vinyl pyrrolidone, l'oxyde d'éthylène, l'oxyde de propylène, l'anhydride maléïque et l'alcool vinylique.

Les polymères naturels sont choisis parmi tels les dérivés cellulosiques modifiés négativement, du type CMC, les polysaccharides de type xanthane, alginate, gomme arabique, les amidons modifiés négativement, les galactomannanes modifiés négativement.

L'un des polyélectrolytes est un polymère cationique choisi parmi les polymères cationiques classiques connus de l'Homme du métier.

On citera par exemple les polymères ou copolymères synthétiques dérivant de monomères cationiques classiques, c'est-à-dire de formule générale suivante : 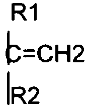 où R1 ou R2 comportent au moins un atome N,
les polyéthylènes imines, les polyamides aminés, les polyamines, les copolymères synthétiques dérivant de monomères cationiques et de monomères neutres et les polymères naturels tels que les amidons modifiés positivement, les chitosanes, la gélatine, les galactomannanes modifiés positivement, ou les dérivés cellulosiques modifiés positivement.

Le couple de polyélectrolytes sera choisi de telle manière que l'un des polyélectrolytes soit un polyélectrolyte faible, c'est-à-dire ayant un taux d'ionisation dépendant du pH. L'émulsion primaire (première émulsion) contenant le mélange de polyélectrolytes en phase aqueuse est réalisée à un pH donné tel que le polyélectrolyte n'est pas ou n'est que très faiblement chargé (pH inférieur au pKA pour un polyanion, supérieur au pKB pour un polycation), l'autre polyélectrolyte étant en revanche chargé.

### Tensio-actifs

On choisira de préférence des tensioactifs non ioniques, ou leur mélange, notamment pour l'émulsion de polyélectrolytes primaire, pour qu'il n'y ait pas d'interaction spécifique trop forte entre les polymères chargés et les molécules de tensioactifs. Comme tensioactif, il est envisageable dans la présente invention d'utiliser tous les tensioactifs non ioniques classiques et connus. Les produits tensioactifs non ioniques peuvent être classés selon le mode de liaison entre la partie hydrophobe et la partie hydrophile de la molécule. Ce mode de liaison peut être un pont éther, un pont ester, un pont amide, ou autres.
On citera par exemple comme dérivés non ioniques à pont éther les alcools gras oxyéthylés, les alkylphénols oxyéthylés, les produits oxyéthylés-oxypropylés, les éthers de glucose. Parmi les agents de surface non ioniques à pont ester, on citera par exemple les esters de glycérol, les esters de polyéthylèneglycols, les esters de sorbitanne, ou les esters de sucre.
Les composés non ioniques à liaisons amides peuvent être des diéthanolamides.
D'autres composés non ioniques tels que les amines grasses éthoxylées peuvent être utilisés.
On peut citer également les alkanolamides éthoxylées, les amines éthoxylées, ou les copolymères bloc d'oxyde d'éthylène ou de propylène.

Plus particulièrement, le système particulaire de taille nanométrique est avantageusement obtenu par un procédé comprenant au moins les étapes suivantes :
1) préparation d'une émulsion calibrée de type eau dans huile (première émulsion) par mélange d'une phase aqueuse comprenant deux polyélectrolytes de charges opposées à un pH élevé ou faible, l'un au moins des polyélectrolytes étant un polyélectrolyte faible, à savoir ayant un taux d'ionisation qui est dépendant du pH, avec une phase organique en présence d'un tensio-actif liposoluble,
2) préparation d'une émulsion de type eau dans huile (deuxième émulsion), pouvant être grossière, par mélange d'au moins une phase aqueuse contenant un acide ou une base dans la phase organique en présence d'un tensio-actif liposoluble et homogénéisation,
3) mélange des deux émulsions obtenues sous agitation mécanique douce.

Notamment le procédé de synthèse comprend les étapes suivantes :
**A.** Préparation d'une première émulsion calibrée de solution de polyélectrolytes de charges opposées dans une phase continue organique par :
   1. Préparation d'un premix brut par mélange de solution aqueuse d'un premier polyélectrolyte et de solution aqueuse d'un deuxième polyélectrolyte pour obtenir une phase aqueuse et introduction progressive de la phase aqueuse obtenue dans le tensio-actif liposoluble.
   2- Cisaillement sous agitation mécanique du prémix brut afin d'obtenir un prémix monodisperse et calibré.
   3- Dilution progressive du prémix calibré par addition de la phase continue organique et homogénéisation.
**B.** Préparation d'une émulsion grossière comprenant une phase aqueuse acide ou basique dans une phase organique par préparation d'une phase aqueuse comprenant un composé acide ou basique, puis dissolution du tensio-actif liposoluble dans la phase organique avec agitation rapide, et introduction progressive de la phase aqueuse et homogénéisation du système.
**C.** Mélange de l'émulsion calibrée A et de l'émulsion grossière B par agitation mécanique, repos et récupération des complexes nanoparticulaires formés par centrifugation et lavage.

L'homogénéisation de chacune des émulsions peut se faire de façon manuelle, ou dans une turbine, par exemple de type Ultra Turrax® (IKA Labortechnik) pour soumettre le mélange à l'action d'un cisaillement important.

La réalisation d'émulsions calibrées d'eau contenant un polymère dans une phase huile peut également se faire par d'autres techniques que celles nécessitant l'utilisation de prémix concentrés en phase dispersée. On peut citer par exemple l'utilisation d'un homogénéiseur haute pression, l'émulsification membranaire ou la séparation de taille à partir d'une émulsion polydisperse.

Si nécessaire, le pH de la phase aqueuse est ajusté par addition d'acide ou de soude à la valeur souhaitée. De la même façon, la force ionique peut également être ajustée.

La concentration en tensioactif doit être suffisante pour que les émulsions soient stables. D'après ce qui est connu de l'homme de l'art, la concentration en tensioactif est préférentiellement supérieure à la CMC (concentration micellaire critique) avant le mélange des deux émulsions

La concentration en polymères dans la phase aqueuse est ajustable en fonction de la concentration et la composition du complexe recherché.
Les concentrations en polymères (anionique et cationique) sont préférentiellement comprises entre 0,01% et 50% en masse dans la phase aqueuse de la première émulsion.

Le rapport des phases eau/huile est variable. Dans les exemples suivants, le rapport est de l'ordre de 10 à 50 % en volume de phase aqueuse et donc de 50 à 90% en volume de phase huile. Toutefois ces proportions ne sont pas limitatives, et d'autres proportions conviennent dans la mesure où elles permettent de former des émulsions suffisamment stables.

Le système particulaire nanométrique utilisé dans la méthode selon la présente invention est caractérisé en déterminant la taille des particules par la méthode de diffusion dynamique de la lumière (DLS).

Des observations réalisées en microscopie optique permettent également de caractériser l'état de dispersion du système obtenu, ainsi que sa stabilité.

La composition peut également comprendre des sels, acides ou bases, ainsi que toute sorte d'additifs, comme par exemple des additifs anticorrosion.

La présente invention porte également sur une méthode de traitement de formations géologiques poreuses et perméables dans laquelle on effectue les étapes suivantes :
- on prépare une composition comprenant le système particulaire de taille nanométrique de complexes polycation/polyanion obtenus par mélange d'une émulsion d'eau contenant un acide (ou une base) dans de l'huile et d'une dispersion en émulsion de type eau dans huile, d'un mélange aqueux contenant deux polyélectrolytes de charges opposées à un pH donné élevé ou faible, ledit pH étant choisi inférieur au pKA pour un polymère anionique, supérieur au pKB pour un polymère cationique, tel qu'au moins un des deux polyélectrolytes ne soit pas (ou soit très faiblement) chargé à ce pH donné, de telle sorte qu'il n'y ait pas d'interaction entre les deux polymères dans l'émulsion primaire de polyélectrolytes, l'un au moins des polyélectrolytes doit être un polyélectrolyte faible.
- on injecte ladite composition dans la formation poreuse et perméable dans laquelle s'écoule de l'eau et/ou de l'huile et/ou du gaz.

### Applications de l'invention

Le système particulaire à base de nanocomplexes obtenu par le procédé de synthèse selon l'invention peut avantageusement être utilisé dans le traitement de formations géologiques, notamment des formations rocheuses et plus particulièrement pétrolières.
L'invention concerne donc également une méthode de traitement de formations géologiques et plus particulièrement de traitement de puits d'exploitation d'hydrocarbures. Ce traitement concerne par exemple la prévention des dépôts minéraux, la prévention des venues d'eau, la prévention des venues de fines particules comme le sable. Il peut également concerner d'autres domaines tels que le contrôle de profils lors d'opérations de récupération assistée par balayage à partir de puits injecteurs (encore appelées "conformance control").
Dans le cas particulier du traitement des réservoirs par injection de nanoparticules contenant un additif anti-dépôts minéraux, il est possible de choisir le polymère anionique de façon à ce qu'il soit un polymère anti-dépôt classique tel qu'un polyacrylate, polyphosphate, phosphonate, polysulfonate, de type hydrosoluble, de masse moléculaire généralement assez faible, comprise entre 400 et 20000 Dalton. Parmi les principaux inhibiteurs, on peut citer :
- les polyphosphates et en particulier l'acide orthophosphorique ;
- les composés organophosphorés comme les esters d'acide phosphorique, les phosphonates et les acides phosphinocarboxyliques ;
- les polymères et copolymères de synthèse à base d'acide acrylique, vinylsulfoniques, maléiques, vinyl acétate, vinyl alcool, acrylamide, comportant éventuellement une ou plusieurs fonctions phosphonate ;
- les produits verts tels que les polyaspartates, les polysaccharides (tels que la carboxyméthylinuline, la carboxyméthylcellulose).

Ainsi dans ce type d'application, en utilisant les particules préparées selon les procédés décrits dans la présente invention, il est possible de les disperser d'après leur mode de fabrication naturellement dans une phase huile, ce qui peut très fortement limiter l'endommagement de la formation pétrolière par rapport à une injection en phase aqueuse. Ceci présente un avantage par rapport à la solution proposée dans la demande de brevet FR 2 881 787.

Dans le cas du traitement en vue de la prévention des venues de sables ou de particules fines mobiles, l'adsorption des particules nanométriques telles que décrites ci-dessus favorise la retenue de ces particules et donc ralentit, voire élimine, les venues de sables ou phénomènes équivalents dans les drains forés dans la formation.
Des remblais de sols peuvent être avantageusement stabilisés et rendus nettement moins perméables par l'injection d'une composition liquide comprenant les particules selon l'invention.

Dans le cas d'un traitement en vue de la prévention des venues d'eau, on injecte ladite composition dans une formation comportant une zone à forte perméabilité à l'eau pour réduire sélectivement la perméabilité à l'eau dans les réservoirs d'huile, de gaz ou dans les stockages de gaz. Selon un mode de réalisation, ladite composition comprend un système particulaire dans lequel le polymère anionique est choisi parmi les polymères actifs anti-dépôts minéraux.

Au niveau du "conformance control", on cherchera à améliorer le contrôle de profil lors d'opérations de récupération assistée par balayage à partir de puits injecteurs. Ce traitement permet de réduire la perméabilité de certaines zones à l'intérieur de la formation pétrolière, et par conséquent d'assurer un meilleur balayage du réservoir. On améliore ainsi le taux de récupération de façon notable.

La présente invention sera mieux comprise et ses avantages apparaîtront plus nettement à la lecture des essais, nullement limitatifs, décrits ci-après.

### Exemple

L'exemple décrit la préparation d'un système nanoparticulaire comprenant comme polymère anionique un inhibiteur de dépôt de type Poly(sodium 4-styrenesulfonate).

Les composés mis en oeuvre sont :
Polymère cationique (polvcation faible): Hydrochlorure de poly(allylamine) M_{w}=70000g.mol⁻¹ (Aldrich) (C₃H₇N, HCl)ₙ, M_{monomère}=57g.mol⁻¹, lot : 14213DH-098, CAS : 71550-12-4 (polycation, noté PAH dans la suite)
Polymère anionique (polvanion fort) : Polv(sodium 4-stvrenesulfonate) M=70000g.mol⁻¹ (Aldrich) (C₈H₇NaO₃S)ₙ, M_{monomère}=206g.mol⁻¹, lot : PS03926KQ, CAS : 25704-18-1 (polyanion, noté PSS dans la suite)
Chlorure de Sodium Rectapur (VWR) NaCl, M=58,44g.mol⁻¹, lot : 07F210006, CAS : 7647-14-5 (sel)
Hydroxyde de Sodium 30% Rectapur (VWR) NaOH, M=40g.mol⁻¹, lot : 0604783, CAS : 1310-73-2 (ajustement pH)
Span 80 (monooléate de sorbitanne) (Sigma) C₂₄H₄₄O₆, M=428,62g.mol⁻¹, lot : 114K0137, CAS : 1338-43-8 (tensio actif liposoluble)
Dodécane pour synthèse Rectapur (VWR) 08B060536 C₁₂H₂₆, M=170,34g.mol⁻¹, Lot : 08B060536, CAS : 112-40-3 (huile, phase continue organique)
Eau MilliQ

La préparation du système nanoparticulaire comprend les étapes suivantes :

### A. Préparation d'une émulsion calibrée Span80/dodécane/phase aqueuse : 5/75/20 (poids)

La phase aqueuse est préparée par mélange, volume à volume,
- de solution aqueuse de PSS70k à 0,06% en poids comprenant un sel NaCI à une concentration 0,1M à pH11,5
- et de solution aqueuse de PAH70k à 0,5% en poids comprenant un sel NaCl à une concentration 0,1M pH11,5.

La concentration finale de chacun des polyélectrolytes dans cette phase aqueuse est de 0,03% en poids de PSS70k et 0,25% poids de PAH70k.

L'émulsion diluée est réalisée à la main, en trois étapes :
1- Introduction progressive de la phase aqueuse dans le tensio-actif liposoluble (Span 80), homogénéisation avec une spatule, le ratio surfactant/phase aqueuse étant de 20/80 poids/poids. On obtient ainsi un prémix brut.
2- Cisaillement du prémix brut dans un mortier afin d'obtenir un prémix monodisperse. On obtient ainsi un prémix calibré.
3- Dilution progressive du prémix calibré par addition de la phase continue huile (dodécane), homogénéisation à la spatule, le ratio prémix/dodécane étant de 25/75 poids/poids.

Le diamètre moyen des gouttes dans l'émulsion calibrée est de 220nm.

### B. Préparation d'une émulsion grossière Span80/dodécane/phase aqueuse : 5/75/20 (poids)

La phase aqueuse est la suivante : Solution aqueuse de NaCI 0,1M à pH acide (2-3)

L'émulsion est réalisée à l'Ultra Turrax® par dissolution du tensio-actif liposoluble (Span 80) dans le dodécane (agitation pendant 1 min à une vitesse de 15 000 rpm) puis introduction progressive de la phase aqueuse et homogénéisation du système (agitation pendant 3 min à une vitesse de 15 000 rpm).
Nous obtenons des gouttelettes de diamètre supérieur au micron (1 200nm environ) et le mélange est très polydisperse (Pdl=0,65).

Dans le cadre de cet exemple, les pH respectifs des deux émulsions sont choisis afin d'obtenir en fin de procédé un pH moyen de 5,5 dans les gouttelettes de phase dispersée.

### C. Mélange des émulsions A et B et récupération des complexes nanoparticulaires

Les deux émulsions précédentes A et B sont mélangées dans le ratio 1:1.

Les deux émulsions (A et B) sont mélangées doucement, volume à volume, au "manège" à une vitesse de 6rpm pendant 2h afin d'accélérer le transfert des espèces H₃O⁺ sans toutefois re-émulsionner les gouttes.

Après un temps de repos (4h), la récupération des complexes est réalisée en deux temps.
1-La phase supérieure du mélange d'émulsions, composée des gouttelettes les plus fines, comportant a priori les complexes nanoparticulaires, est prélevée.
2-Cette fraction d'émulsion subit une série d'étapes de centrifugation et lavage afin de casser l'émulsion et récupérer les complexes. La partie prélevée est ainsi centrifugée pendant 1h à une vitesse de 6 000 rpm, puis le surnageant est remplacé par de l'huile végétale (par exemple une huile de tournesol, les émulsions à base de Span 80 étant instables dans ce type d'huile). Après homogénéisation, le mélange est à nouveau centrifugé. La phase huile est retirée et on récupère la partie aqueuse. Un second cycle de rinçage à l'huile végétale peut-être nécessaire pour récupérer davantage de phase aqueuse.

La phase aqueuse obtenue par ce procédé est trouble et son pH est égal à 5,8. Elle contient des particules dont le diamètre hydrodynamique mesuré par DLS est d'environ 260nm, avec un indice de polydispersité de 0,4. Les particules ont donc des tailles du même ordre de grandeur que celles des nanocomplexes de polyélectrolytes de charges opposées (PEC) directement obtenus à pH10 (par mélange simple des solutions de PSS et PAH à pH10).

L'expérience prouve de façon indiscutable que des particules de PEC se sont formées dans les gouttelettes d'émulsion. La valeur mesurée du potentiel zêta est de -21mV.

| | *Gouttelettes d'émulsion calibrée « basique » (A)* | *Gouttelettes d'émulsion grossière « acide » (B)* | *Particules récupérées pH 5,8 (pot. Zêta*= - *21mV)* |
|---|---|---|---|
| *Diamètre (nm)* | *220* | *>1200* | *260* |

On observe que la mise en présence des gouttes de phase aqueuse acide avec la suspension à pH 11,5 a induit la formation des complexes dans les gouttelettes d'émulsion fine.

Sans vouloir être lié par une quelconque théorie, il semble que le mécanisme impliqué soit la diffusion des ions H₃O⁺ des gouttelettes de l'émulsion grossière vers les gouttelettes fines à pH basique. En effet, d'après la littérature (Pays K., Giermanska-Kahn J., Pouligny B., Bibette J., Leal-Calderon F., "Double emulsions : how does release occur ?", Journal of Controlled Release, 2002, 79, 193-205 ; Pays K., Giermanska-Kahn J., Pouligny B., Bibette J., Leal-Calderon F., "Double emulsions: a tool for probing thin film metastability", Phys. Rev. Lett., 2001, 87, art. n°178304 (a) ; Pays K., Giermanska-Kahn J., Pouligny B., Bibette J., Leal-Calderon F., "Coalescence in surfactant-stabilized double emulsions", Langmuir, 2001, 17, 7758-7769), l'eau ainsi que les espèces ioniques de faible masse molaire diffusent très rapidement au travers de la phase huile.

## Revendications

1. Procédé de synthèse d'un système nanoparticulaire de complexes de polyélectrolytes de charges opposées en phase organique par mélange :
- d'une première émulsion calibrée de type eau dans huile comprenant une phase continue organique, un tensio-actif liposoluble et une phase aqueuse dispersée contenant un mélange de deux polyélectrolytes de charges opposées : un polymère anionique et un polymère cationique, à un pH élevé ou faible choisi de telle sorte qu'au moins un des deux polyélectrolytes ne soit pas ou soit très faiblement chargé, l'un au moins des polyélectrolytes ayant un taux d'ionisation dépendant du pH, ledit pH étant inférieur au pKA pour un polymère anionique, supérieur au pKB pour un polymère cationique;
- d'une deuxième émulsion de type eau dans huile comprenant une phase aqueuse acide ou basique, dispersée dans une phase continue organique et un tensio-actif liposoluble, ladite phase aqueuse étant acide lorsque ledit polyélectrolyte ayant un taux d'ionisation dépendant du pH est le polymère cationique et basique lorsque ledit polyélectrolyte ayant un taux d'ionisation dépendant du pH est le polymère anionique.

2. Procédé selon la revendication 1 comprenant au moins les étapes suivantes:
a) Préparation de ladite première émulsion calibrée de solution de polyélectrolytes de charges opposées dans une phase continue organique par :
• Préparation d'un premix brut par mélange de solution aqueuse d'un premier polyélectrolyte et de solution aqueuse d'un deuxième polyélectrolyte pour obtenir une phase aqueuse et introduction progressive de la phase aqueuse obtenue dans le tensio-actif liposoluble.
• Cisaillement sous agitation mécanique du prémix brut afin d'obtenir un prémix monodisperse et calibré.
• Dilution progressive du prémix calibré par addition de la phase continue organique et homogénéisation.
b) Préparation de ladite deuxième émulsion sous forme d'une émulsion grossière comprenant une phase aqueuse acide ou basique dans une phase organique par préparation d'une phase aqueuse comprenant un composé acide ou basique, puis dissolution du tensio-actif liposoluble dans la phase organique avec agitation rapide, et introduction progressive de la phase aqueuse et homogénéisation du système.
c) Mélange de ladite première émulsion calibrée et de ladite deuxième émulsion grossière par agitation mécanique, repos et récupération des complexes nanoparticulaires formés par centrifugation et lavage.

3. Procédé selon l'une des revendications 1 à 2 dans lequel ledit polymère anionique est choisi parmi les polymères ou copolymères dérivant de monomères anioniques contenant des groupements carboxylate, sulfonate, phosphate ou phosphonate, les copolymères synthétiques dérivant de monomères anioniques tels que décrits précédemment et de monomères neutres et les polymères naturels.

4. Procédé selon l'une des revendications 1 à 3 dans lequel ledit polymère cationique est choisi parmi les polymères ou copolymères synthétiques dérivant de monomères cationiques classiques, c'est-à-dire de formule générale suivante : 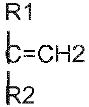 où R1 ou R2 comportent au moins un atome N,
les polyethylènes imines, les polyamides aminés, les polyamines, les copolymères synthétiques dérivant de monomères cationiques et de monomères neutres et les polymères naturels tels que les amidons modifiés positivement, les chitosanes, la gélatine, les galactomannanes modifiés positivement, ou les dérivés cellulosiques modifiés positivement.

5. Procédé selon l'une des revendications 1 à 4 dans lequel ledit tensioactif liposoluble est un tensioactif non ionique choisi parmi les alcools gras oxyéthylés, les alkylphénols oxyéthylés, les produits oxyéthylés-oxypropylés, les éthers de glucose, les esters de glycérol, les esters de polyéthylèneglycols, les esters de sorbitanne, les esters de sucre, les diéthanolamides, les amines grasses éthoxylées, alkanolamides éthoxylées, les amines éthoxylées, ou les copolymères bloc d'oxyde d'éthylène ou de propylène .

6. Procédé selon l'une des revendications 1 à 5 **caractérisé en ce que** ladite phase continue organique est constituée soit par une huile minérale commerciale soit par une huile de synthèse, ou par une huile végétale ou tout mélange de ces huiles.

7. Procédé selon l'une des revendications 1 à 6 dans lequel la concentration en tensioactif est supérieure à la concentration micellaire critique avant le mélange de ladite première émulsion calibrée et de ladite deuxième émulsion.

8. Procédé selon l'une des revendications 1 à 7 dans lequel la concentration en polymères anionique ou cationique dans la phase aqueuse est comprise entre 0,01 et 50% en masse.

9. Procédé selon l'une des revendications 1 à 8 dans lequel le rapport des phases eau/huile est compris entre 10 et 50 % en volume de phase aqueuse.

10. Méthode de traitement d'une formation géologique poreuse et perméable dans laquelle on effectue les étapes suivantes :
- on prépare une composition comprenant un système particulaire de taille nanométrique de complexes polycation/polyanion obtenus par mélange
- d'une première émulsion calibrée de type eau dans huile comprenant une phase continue organique, un tensio-actif liposoluble et une phase aqueuse dispersée contenant un mélange de deux polyélectrolytes de charges opposées : un polymère anionique et un polymère cationique, à un pH élevé ou faible choisi de telle sorte qu'au moins un des deux polyélectrolytes ne soit pas ou soit très faiblement chargé, l'un au moins des polyélectrolytes ayant un taux d'ionisation dépendant du pH, ledit pH étant inférieur au pKA pour un polymère anionique, supérieur au pKB pour un polymère cationique;
- d'une deuxième émulsion de type eau dans huile comprenant une phase aqueuse acide ou basique, dispersée dans une phase continue organique et un tensio-actif liposoluble, ladite phase aqueuse étant acide lorsque ledit polyélectrolyte ayant un taux d'ionisation dépendant du pH est le polymère cationique et basique lorsque ledit polyélectrolyte ayant un taux d'ionisation dépendant du pH est le polymère anionique.
- on injecte ladite composition dans la formation poreuse et perméable dans laquelle s'écoulent de l'eau et/ou de l'huile et/ou du gaz.

11. Méthode selon la revendication 10 dans laquelle on injecte ladite composition dans une formation comportant une zone à forte perméabilité à l'eau pour réduire sélectivement la perméabilité à l'eau dans les réservoirs d'huile, de gaz ou dans les stockages de gaz.

12. Méthode selon l'une des revendications 10 à 11 dans laquelle ladite composition comprend un système particulaire dans lequel le polymère anionique est choisi parmi les polymères actifs anti-dépôts minéraux.

## Patentansprüche

1. Verfahren zur Synthese eines Nanopartikelsystems von Polyelektrolytkomplexen mit entgegengesetzten Ladungen in organischer Phase durch Mischen:
- einer ersten kalibrierten Emulsion vom Typ Wasser in Öl, umfassend eine kontinuierliche organische Phase, ein fettlösliches Tensid und eine dispergierte wässrige Phase, die ein Gemisch von zwei Polyelektrolyten mit entgegengesetzten Ladungen enthält: ein anionisches Polymer und ein kationisches Polymer, mit einem hohen oder niedrigen pH-Wert, der derart gewählt ist, dass mindestens eines der zwei Polyelektrolyte nicht oder sehr gering geladen ist, wobei mindestens eines der Polyelektrolyte eine lonisierungsrate, die vom pH-Wert abhängt, aufweist, wobei der pH-Wert niedriger als der pKa-Wert für ein anionisches Polymer ist, größer als der pKb-Wert für ein kationisches Polymer ist;
- einer zweiten Emulsion vom Typ Wasser in Öl, umfassend eine saure oder basische wässrige Phase, die in einer kontinuierlichen organischen Phase dispergiert ist, und ein fettlösliches Tensid, wobei die wässrige Phase sauer ist, wenn das Polyelektrolyt, das eine lonisierungsrate aufweist, die vom pH-Wert abhängt, das kationische Polymer ist, und basisch ist, wenn das Polyelektrolyt, das eine lonisierungsrate aufweist, die vom pH-Wert abhängt, das anionische Polymer ist.

2. Verfahren nach Anspruch 1, umfassend mindestens die folgenden Schritte:
a) Herstellung der ersten kalibrierten Emulsion einer Lösung von Polyelektrolyten mit entgegengesetzten Ladungen in einer kontinuierlichen organischen Phase durch:
• Herstellung eines rohen Premix durch Mischen einer wässrigen Lösung eines ersten Polyelektrolyts und einer wässrigen Lösung eines zweiten Polyelektrolyts, um eine wässrige Phase zu erhalten, und progressives Einleiten der erhaltenen wässrigen Phase in das fettlösliche Tensid,
• Scherbelastung unter mechanischem Rühren des rohen Premix, um einen monodispersen und kalibrierten Premix zu erhalten,
• progressives Verdünnen des kalibrierten Premix unter Beigabe der kontinuierlichen organischen Phase und Homogenisieren,
b) Herstellung der zweiten Emulsion in Form einer groben Emulsion, umfassend eine saure oder basische wässrige Phase in einer organischen Phase durch Herstellung einer wässrigen Phase, umfassend eine saure oder basische Verbindung, dann Auflösung des fettlöslichen Tensids in der organischen Phase unter raschem Rühren, und progressives Einleiten der wässrigen Phase und Homogenisieren des Systems.
c) Mischen der ersten kalibrierten Emulsion und der zweiten groben Emulsion durch mechanisches Rühren, Rasten und Gewinnung der Nanopartikelkomplexe, die durch Zentrifugieren und Waschen gebildet werden.

3. Verfahren nach einem der Ansprüche 1 bis 2, bei dem das anionische Polymer unter den Polymeren oder Copolymeren ausgewählt ist, die Derivate von anionischen Monomeren darstellen, die Carboxylat-, Sulfonat-, Phosphat- oder Phosphonatgruppierungen enthalten, wobei die synthetischen Copolymere Derivate von anionischen Monomeren, wie vorher beschrieben, und neutrale Monomere und natürliche Polymere darstellen.

4. Verfahren nach einem der Ansprüche 1 bis 3, bei dem das kationische Polymer unter den synthetischen Monomeren oder Copolymeren ausgewählt ist, die Derivate von herkömmlichen kationischen Monomeren darstellen, d.h. folgende allgemeine Formel aufweisen: 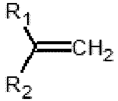 wobei R1 oder R2 mindestens ein Atom N, die Imin-Polyethylene, die Amin-Polyethylene, die Polyamine, die synthetischen Copolymere, die Derivate von kationischen Monomeren und neutralen Monomeren darstellen, und die natürlichen Polymere umfassen, wie die positiv modifizierten Stärken, die Chitosane, Gelatine, positiv modifizierten Galactomannane oder die positiv modifizierten Zellulosederivate.

5. Verfahren nach einem der Ansprüche 1 bis 4, bei dem das fettlösliche Tensid ein nicht ionisches Tensid ist, das unter den Oxyethylfettalkoholen, den Oxyethylalkylphenolen, den Oxyethyl-Oxypropyl-Produkten, den Glukoseethern, den Glycerolestern, den Polyethylenglykolestern, den Sorbitanestern, den Zuckerestern, den Diethanolamiden, den ethoxylierten Fettaminen, den ethoxylierten Alkanolamiden, den ethoxylierten Aminen oder den Block-Copolymeren von Ethylenoxid oder Propylen ausgewählt ist.

6. Verfahren nach einem der Ansprüche 1 bis 5, **dadurch gekennzeichnet, dass** die kontinuierliche organische Phase entweder von einem handelsüblichen Mineralöl oder von einem Syntheseöl oder von einem Pflanzenöl oder jedem Gemisch dieser Öle gebildet ist.

7. Verfahren nach einem der Ansprüche 1 bis 6, bei dem die Tensidkonzentration höher als die kritische Mizellen-Konzentration vor dem Mischen der ersten kalibrierten Emulsion und der zweiten Emulsion ist.

8. Verfahren nach einem der Ansprüche 1 bis 7, bei dem die Konzentration an anionischen oder kationischen Polymeren in der wässrigen Phase zwischen 0,01 und 50 Massen-% beträgt.

9. Verfahren nach einem der Ansprüche 1 bis 8, bei dem das Verhältnis der Phasen Wasser/Öl zwischen 10 und 50 Volumen-% einer wässrigen Phase beträgt.

10. Verfahren zur Behandlung einer porösen oder durchlässigen geologischen Formel, bei dem die folgenden Schritte durchgeführt werden:
- Herstellung einer Zusammensetzung, umfassend Partikelsystem von nanometrischer Größe von Polykation-/Polyanion-Komplexen, die erhalten werden durch Mischen:
- einer ersten kalibrierten Emulsion vom Typ Wasser in Öl, umfassend eine kontinuierliche organische Phase, ein fettlösliches Tensid und eine dispergierte wässrige Phase, die ein Gemisch von zwei Polyelektrolyten mit entgegengesetzten Ladungen enthält: ein anionisches Polymer und ein kationisches Polymer, mit einem hohen oder niedrigen pH-Wert, der derart gewählt ist, dass mindestens eines der zwei Polyelektrolyte nicht oder sehr gering geladen ist, wobei mindestens eines der Polyelektrolyte eine lonisierungsrate, die vom pH-Wert abhängt, aufweist, wobei der pH-Wert niedriger als der pKa-Wert für ein anionisches Polymer ist, größer als der pKb-Wert für ein kationisches Polymer ist;
- einer zweiten Emulsion vom Typ Wasser in Öl, umfassend eine saure oder basische wässrige Phase, die in einer kontinuierlichen organischen Phase dispergiert ist, und ein fettlösliches Tensid, wobei die wässrige Phase sauer ist, wenn das Polyelektrolyt, das eine lonisierungsrate aufweist, die vom pH-Wert abhängt, das kationische Polymer ist, und basisch ist, wenn das Polyelektrolyt, das eine lonisierungsrate aufweist, die vom pH-Wert abhängt, das anionische Polymer ist.
- Injizieren der Zusammensetzung in die poröse und durchlässige Formel, in der Wasser und/oder Öl und/oder Gas abfließen.

11. Verfahren nach Anspruch 10, bei dem die Zusammensetzung in eine Formel injiziert wird, umfassend eine Zone mit hoher Wasserdurchlässigkeit, um selektiv die Wasserdurchlässigkeit in den Öl-, Gasbehältern oder in den Gasspeichern zu verringern.

12. Verfahren nach einem der Ansprüche 10 bis 11, wobei die Zusammensetzung ein Partikelsystem enthält, in dem das anionische Polymer unter den aktiven Polymeren zur Verhinderung von Mineralablagerungen ausgewählt ist.

## Claims

1. Method for synthesizing a nanoparticulate system of complexes of polyelectrolytes with opposite charges in the organic phase, by mixing:
- a first calibrated emulsion of water-in-oil type comprising an organic continuous phase, a liposoluble surfactant and a dispersed aqueous phase containing a mixture of two polyelectrolytes with opposite charges: an anionic polymer and a cationic polymer, at a high or low pH chosen such that at least one of the two polyelectrolytes is not charged or is very weakly charged, at least one of the polyelectrolytes having a pH-dependent degree of ionization, said pH being less than the pKA for an anionic polymer, greater than the pKB for a cationic polymer;
- a second emulsion of water-in-oil type comprising an acidic or basic aqueous phase dispersed in an organic continuous phase and a liposoluble surfactant, said aqueous phase being acidic when said polyelectrolyte having a pH-dependent degree of ionization is the cationic polymer and basic when said polyelectrolyte having a pH-dependent degree of ionization is the anionic polymer.

2. Method according to Claim 1, comprising at least the following steps:
a) Preparation of said first calibrated emulsion of solution of polyelectrolytes with opposite charges in an organic continuous phase by:
• Preparation of a crude premix by mixing an aqueous solution of a first polyelectrolyte and an aqueous solution of a second polyelectrolyte so as to obtain an aqueous phase and gradual introduction of the aqueous phase obtained into the liposoluble surfactant.
• Shearing, with mechanical stirring, of the crude premix in order to obtain a monodisperse and calibrated premix.
• Gradual dilution of the calibrated premix by addition of the organic continuous phase and homogenization.
b) Preparation of said second emulsion in the form of a coarse emulsion comprising an acidic or basic aqueous phase in an organic phase by preparation of an aqueous phase comprising an acidic or basic compound, then dissolution of the liposoluble surfactant in the organic phase with rapid stirring, and gradual introduction of the aqueous phase and homogenization of the system.
c) Mixing of said first calibrated emulsion and of said second coarse emulsion by mechanical stirring, resting and recovery of the nanoparticulate complexes formed, by centrifugation and washing.

3. Method according to either of Claims 1 and 2, in which said anionic polymer is chosen from polymers or copolymers deriving from anionic monomers containing carboxylate, sulphonate, phosphate or phosphonate groups, synthetic copolymers deriving from anionic monomers as described above and from neutral monomers, and neutral polymers.

4. Method according to one of Claims 1 to 3, in which said cationic polymer is chosen from synthetic polymers or copolymers deriving from conventional cationic monomers, that is to say having the following general formula: 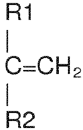 in which R1 or R2 comprises at least one N atom,
polyethyleneimines, polyamide amines, polyamines, synthetic copolymers deriving from cationic monomers and from neutral monomers, and natural polymers such as positively modified starches, chitosans, gelatin, positively modified galactomannans, or positively modified cellulose-based derivatives.

5. Method according to one of Claims 1 to 4, in which said liposoluble surfactant is a nonionic surfactant chosen from oxyethylated fatty alcohols, oxyethylated alkylphenols, oxyethylated-oxypropylated products, glucose ethers, glycerol esters, polyethylene glycol esters, sorbitan esters, sugar esters, diethanolamides, ethoxylated fatty amines, ethoxylated alkanolamides, ethoxylated amines, or block copolymers of ethylene oxide or of propylene oxide.

6. Method according to one of Claims 1 to 5, **characterized in that** said organic continuous phase consists either of a commercial mineral oil or of a synthetic oil, or of a vegetable oil, or any mixture of these oils.

7. Method according to one of Claims 1 to 6, in which the concentration of surfactant is greater than the critical micelle concentration before the mixing of said first calibrated emulsion and said second emulsion.

8. Method according to one of Claims 1 to 7, in which the concentration of anionic or cationic polymers in the aqueous phase is between 0.01% and 50% by weight.

9. Method according to one of Claims 1 to 8, in which the ratio of the water/oil phases is between 10% and 50% by volume of aqueous phase.

10. Method for treating a porous and permeable geological formation, in which the following steps are carried out:
- preparing a composition comprising a nanometric-size particulate system of polycation/polyanion complexes obtained by mixing
- a first calibrated emulsion of water-in-oil type comprising an organic continuous phase, a liposoluble surfactant and a dispersed aqueous phase containing a mixture of two polyelectrolytes with opposite charges: an anionic polymer and a cationic polymer, at a high or low pH chosen such that at least one of the two polyelectrolytes is not charged or is very weakly charged, at least one of the polyelectrolytes having a pH-dependent degree of ionization, said pH being less than the pKA for an anionic polymer, greater than the pKB for a cationic polymer;
- a second emulsion of water-in-oil type comprising an acidic or basic aqueous phase is dispersed in an organic continuous phase and a liposoluble surfactant, said aqueous phase being acidic when said polyelectrolyte having a pH-dependent degree of ionization is the cationic polymer and basic when said polyelectrolyte having a pH-dependent degree of ionization is the anionic polymer;
- injecting said composition into the porous and permeable formation in which water and/or oil and/or gas flows.

11. Method according to Claim 10, in which said composition is injected into a formation comprising a zone with a high permeability to water in order to selectively reduce the permeability to water in oil or gas reservoirs or in gas stores.

12. Method according to either of Claims 10 and 11, in which said composition comprises a particulate system in which the anionic polymer is chosen from mineral-deposit-inhibiting active polymers.
